# EUROPEAN PATENT SPECIFICATION

(11) **EP 2 714 368 B1**
(45) Date of publication and mention of the grant of the patent: **14.10.2015**
(21) Application number: 12731687.5
(22) Date of filing: 15.05.2012
(51) Int. Cl.: B29C 47/92, B26D 1/18, B26D 1/24, B26D 1/40, B26D 1/62, B29B 9/04, B29L 30/00, B29K 21/00

(54) **METHOD AND APPARATUS FOR PRODUCING TYRES**
VERFAHREN UND VORRICHTUNG ZUR REIFENERZEUGUNG
PROCÉDÉ ET APPAREIL DE FABRICATION DE PNEUMATIQUES

(30) Priority: 31.05.2011 IT MI20110991; 21.06.2011 US 201161499423 P
(43) Date of publication of application: 09.04.2014
(73) Proprietor: Pirelli Tyre S.p.A., 20126 Milano (IT)
(72) Inventor: TESTI, Stefano, I-20126 Milano (IT); BOTTOMLEY, Alan, Carlisle Cumbria CA2 6 (GB); LONGONI, Alessio, I-20126 Milano (IT); MONTEROSSO, Antonio, I-20126 Milano (IT)
(74) Representative: Tirloni, Bartolomeo
(86) International application number: PCT/IB2012/052420
(87) International publication number: WO 2012/164424

(56) References cited:
- EP-A1- 1 036 750
- US-A- 3 800 894
- US-A- 5 626 420
- US-A1- 2005 082 402
- DATABASE WPI Week 200245 Thomson Scientific, London, GB; AN 2002-420511 XP002670501, -& JP 2002 059021 A (TOSHIBA MACHINE CO LTD) 26 February 2002 (2002-02-26)

## Description

### Field of the invention

The present invention relates to a method and an apparatus for producing tyres.
In particular, the invention pertains to an extrusion method and an apparatus for producing elastomeric compounds intended for manufacture of tyres for vehicle wheels.

### Background art

The elastomeric compounds required for manufacturing the tyre components can be provided from extruders working continuously. Extrusion devices for producing elastomeric compounds intended for manufacture of tyres for vehicle wheels are known from documents WO 2010/004595, US 20060108607, US 5,758,961 and US 5 626 420 A. US 3 800 894 A discloses a device for feeding components metered by weight to a mixing device.
The known document US 6,766,721 discloses an apparatus for converting a bale or plate of elastomeric material into small cubes or blocks to be fed continuously and at a given flow rate to a mixing machine or a mixer.

### Summary of the invention

The Applicant, within the tyre production scope in which at least one structural element of the tyre comprises at least one elastomeric compound produced by a continuously fed mixing extruder, has concentrated its attention on some operations.

In particular, the Applicant has examined the operations carried out on the elastomeric compound when it is produced by mixing carried out in continuous or discontinuous apparatus and is subsequently submitted to one or more further mixing operations. Between a mixing operation and the following one the elastomeric compounds can be stored and/or kept preferably in the form of ribbons or sheets.

The Applicant has tackled the problem of improving the quality of a produced compound and at the same time increasing the mixing plant's productivity and has noticed that for reaching this aim it is possible to control both feeding of the elastomeric compound to a continuous mixer and the amount of elastomeric compound treated in the time unit, so as to make each of the components of the apparatus work under optimal flow rate conditions.

The Applicant has observed that raising of the compound temperature too much inside the mixing extruder can be a limit to the mixing plant's productivity. This raising, for example connected with too high rotation speeds of the extrusion screws, can cause scorching of the compound itself.

The Applicant has observed that in continuous extruders provided with a flow rate control system located upstream, the flow rate of the compound treated by them is substantially independent of the number of revolutions per minute of the extrusion screw, at least within a normally used revolution rate. By increasing the number of revolutions per minute and keeping the flow rate unchanged, the filling degree of the extruder decreases. By decreasing the number of revolutions per minute and leaving the flow rate unchanged, the filling degree of the extruder increases.

By "filling degree" it is intended the ratio between the volume occupied by the elastomeric material in the extrusion chamber delimited by the extrusion screws and the inner walls of the housing of such screws in the extruder, and the overall volume of this chamber. The filling degree indicates the ability of the mixing extruder to treat the amount of material it receives at the entry.

The Applicant has observed that the flow rate and quality of the produced compound can represent characteristics correlated with the filling degree that however is of difficult detection.

The Applicant has noticed that it is possible to control the magnitude values indicative of the filling degree in such a manner that by setting a range of these indicative magnitude values it is possible to control the compound productivity and quality.

In fact the Applicant has observed that the mixing extruder's productivity is higher and the compound is of better quality if, during production of the compounds in the extruder, operation takes place under steady conditions keeping said magnitude values indicative of the filling degree within a predetermined range, once the other operating parameters have been set, such as, for example, type of motor, screw shape, type of compound, temperature, pressure, rotation speed of the screws.

The Applicant has found it advantageous to produce an elastomeric compound comprising at least one elastomeric polymer and at least one reinforcing filler in at least one discontinuous mixer and subsequently reduce this compound into small pieces and feed it to a mixing extruder for treating this compound by a further mixing operation.

The Applicant has found that by controlling the feedback production speed of the small pieces into which the elastomeric compound is converted and the feeding speed of the small pieces themselves to the mixing extruder as a function of the magnitude values indicative of the filling degree of the extruder itself, it is possible to maintain these magnitude values in the preset neighbourhood of a predetermined value, preferably the most efficient value of the extruder's productivity.

The Applicant has further found that said feedback control enables the small pieces to be managed preventing them from being packed even in the substantial absence of previous coating with powdery anti-stick agents (such as silica or talc) used for compounds reduced to granules in the known art granulating machines, which agents not only contaminate the compound but are also of hard removal.

The invention is a method and an apparatus in accordance with claims 1, 7.

After fixing a predetermined value range of said magnitude indicative of the filling degree of the extruder for given work parameters (geometric or operative parameters of the machine such as, for example, type of motor, screw shape, rotation speed of the screws, pressure, or also other parameters correlated with the compound to be produced such as type of compound, temperature, scorching time of the compound, for example), the sensor, instant by instant, detects this indicative magnitude, compares it with the predetermined value range and drives the device for reducing the elastomeric compound into small pieces so that it adjusts its production speed to the extruder's particular requirements. The instant-by-instant detected value will have little oscillation around the predetermined value in such a manner that the average in time is substantially equal to said predetermined value.

Said feedback control according to the invention enables the extruder to be operated to a filling degree closely near the optimal one (as regards quality and productivity of the produced compound), which degree is not known by itself and can be hardly measured but corresponds to the predetermined value of the detected indicative magnitude.

The sizes of the small pieces are further controlled, which means that they are maintained within a predetermined value range suitable for the process.

The present invention, in at least one of the above aspects, can have one or more of the preferred features hereinafter described.

In accordance with an embodiment of the method, the detected magnitude is the torque of the screws of the mixing extruder.

The torque can be detected by measuring the current absorbed by the motor moving the extrusion screws.
The Applicant has found that the direct measurement of the filling degree intended as the above specified ratio between the volumes, during the extrusion process can be of difficult detection and the acceptable maximum filling degree is preferably the filling degree beyond which either the motor is no longer able to cause rotation of the mixing extruder's screws (maximum torque: it is detected by the motor absorption) or a loading hopper of the extruder begins filling with material until a predetermined level is reached and exceeded.

In accordance with an embodiment of the method, the detection value is the filling level of an inlet hopper of the mixing extruder.

The indirect measurement of the filling degree takes place through measurement of the level reached by the material in small pieces in the hopper of the mixing extruder during processing.

Preferably, both the above magnitude values (torque and hopper level) are detected, and preferably the magnitude for feedback feeding control of the mixing extruder is that of the two values that diverge more from the predetermined value.

The magnitude indicative of the filling degree is considered as diverging from the predetermined value when it is out of the preset neighbourhood of this predetermined value.

By "preset neighbourhood" it is intended a more or less wide value range within which said predetermined value falls. By way of example, given a preset torque value of 90% of the maximum torque of the motor, the preset neighbourhood may be either included between 70% and 98% of the maximum torque or may be much smaller, for instance included between 89.5% and 90.5% of the maximum torque. By way of example, given a preset filling value equal to 80% of the maximum filling value of the hopper, the preset neighbourhood can be included between 60% and 90% of the maximum filling or can be much smaller, included between 79.7% and 80.5% of the maximum filling, for example.

Preferably, in case of process control through two magnitude values indicative of the filling degree, the magnitude that will carry out feedback control of the feeding is the one that is out of said preset neighbourhood first.

Operatively, if during work of the mixing extruder the torque goes out of the respective preset neighbourhood (e.g. preset torque value equal to 90% of the maximum torque supplied by the motor; preset torque neighbourhood included between 85% and 95% of the maximum torque; detected torque equal to 98%), while the hopper limit remains within the respective preset neighbourhood (e.g. preset filling value equal to 40%; preset neighbourhood included between 30% and 50%; detected filling equal to 37%), it is the detected torque that controls the device for reducing into small pieces, reducing the operating speed thereof.

If, on the contrary, the torque remains within the respective predetermined neighbourhood (e.g. preset torque value equal to 90% of the maximum torque supplied by the motor; preset torque neighbourhood included between 85% and 95% of the maximum torque; detected torque equal to 89%), while the hopper filling goes below the preset neighbourhood (e.g. preset filling value equal to 40%; preset neighbourhood included between 30% and 50%; detected filling equal to 26%) it is the detected filling that controls the device for reducing into small pieces, increasing the operating speed thereof.

Preferably, the method comprises: adjusting the rotation speed of the screws of the mixing extruder, in such a manner as to keep the detected magnitude in the preset neighbourhood of the predetermined value.

In addition, not only the adjustment of the production speed of the small pieces of elastomeric compound, but also the adjustment of the rotation speed of the extrusion screws affects the filling degree of the mixing extruder and is therefore an additional control parameter of the method.

According to a preferred embodiment, the small pieces are cut out from a ribbon, a sheet or a bale of said elastomeric compound.

Reduction into small pieces by cut enables a more precise control of the sizes.

Preferably, the small pieces have centimetre sizes.

Preferably, the small pieces have two sides with sizes at least as large as about 10 mm.

The term "centimetre size" is understood as indicating that a small piece has at least two of the three sizes in the order of one or some centimetres.
The material is for example cut into small cubes, blocks, tiles or other similar shapes.

Preferably, the thickness of the ribbon is included between about 5 mm and about 25 mm, more preferably between 5 mm and 15 mm.

Preferably the edges of the small pieces resulting from the cut are included between about 10 mm and about 70 mm. Preferably, the edges of the small pieces resulting from the cut are included between about 25 mm and about 50 mm.

The small pieces have controlled sizes big enough not to become packed too easily and at the same time small enough to enable them to be easily introduced into the mixing extruder and treated thereby.

Possibly, the method comprises: spraying a lubricating liquid on the elastomeric compound during or after reducing it into small pieces, so as to improve flowing of the small pieces when they reach the hopper.

This liquid is, for example, soapy water that is eliminated without any problem during mixing in the extruder without leaving polluting substances.

Preferably, the elastomeric compound to be fed to the continuous mixing extruder is produced by at least one mixing operation carried out in at least one discontinuous mixer of the closed type (Banbury^{®}, Intermix^{®}) or open type (Z-blade mixer).

Preferably, the elastomeric compound to be fed to the mixing extruder is obtained in the form of a continuous ribbon (sheets) folded over into layers and is continuously fed to a device for reducing it into small pieces.

Use of this type of semi-finished product enables the production cycles to be lengthened without the elastomeric starting compound requiring to be supplied frequently.

According to an embodiment, in the mixing extruder a remixing operation of the elastomeric compound is carried out.

According to an alternative embodiment, the method comprises: feeding the mixing extruder with additional ingredients besides the elastomeric compound.

The present invention is therefore applicable both in remilling operations carried out on a finished compound (for example, previously produced in at least on discontinuous mixer) without adding other ingredients and in the true mixing consisting in carrying out working of the compound with the mixing extruder adding other ingredients in determined proportions relative to each other (and to the compound to be fed to the mixing extruder).

Preferably, in case of mixing, said additional ingredients are continuously weighed before introducing them into the mixing extruder and metered in predetermined proportions with the small pieces of the elastomeric compound.

In both the above mentioned cases (remilling and mixing), the starting compound kept in the form of a ribbon or sheet and designed to be reduced into small pieces is a finished compound, i.e. already with the added ingredients making it suitable for use in the manufacture of semifinished products intended for tyre production. This finished compound is produced by means of at least one discontinuous mixing device, an internal mixing for example, preferably a Banbury^{®} mixer having two counter-rotating rotors exerting a strong mixing action for masticating the elastomeric polymer or polymers and incorporating and dispersing thereinto the other components normally present in the elastomeric compounds, such as reinforcing fillers, lubrication adjuvants, vulcanising agents and other additives, for example.

More preferably, this finished compound is produced by at least one mixing step carried out in said discontinuous mixing device and by subsequent shaping of the elastomeric compound into a ribbon or sheet.

The combined mixing in the discontinuous mixer and mixing in the continuous mixing extruder (after reducing the ribbon or sheet into small pieces; with or without addition of other ingredients) allows, through feedback feeding control, a compound of better quality to be obtained along with high productivity.

In accordance with an embodiment of the apparatus, the mixing extruder comprises an inlet hopper and the detecting device comprises a level sensor operatively acting on the inlet hopper for detecting the level of the small pieces in transit in said inlet hopper.

Preferably, the level sensor is of the laser type.

Adopting the level sensor of the claimed type allows measurement to be carried out without the structure of the mixing extruder having to be modified, and therefore said measurement is made also possible on extruders already commercially available.

The laser sensor reads the material level in the hopper, the control unit, for example, calculates the average level (in time and/or space) and compares it with a preset range comprising a predetermined value and then rectifies the speed of reducing the elastomeric compound into small pieces : if the level is too high, the sensor reduces the speed of reducing the elastomeric compound into small pieces; if the level is too low, it increases the speed of reducing the elastomeric compound into small pieces. During the whole method, therefore the speed oscillates in the neighbourhood of a value corresponding to the preset level range.

In accordance with an embodiment of the apparatus, the detecting device is operatively active on the extrusion screws and detects the torque of said extrusion screws.

This alternative embodiment too, enables the measurement to be carried out without the structure of the mixing extruder having to be modified and therefore makes its use also possible on extruders already commercially available.

The value of the current absorbed by the motor of the screws is detected and possibly it is averaged in time.

The control unit calculates a mean torque value and compares it with a preset range so as to subsequently rectify the production speed of the small pieces of elastomeric compound: if the torque is too high, the production speed of the small pieces of elastomeric compound is reduced; if the torque is too small, the production speed of the small pieces of elastomeric compound is increased. During the whole method, the speed therefore oscillates in the neighbourhood of a value corresponding to the preset torque range.

In a preferred embodiment, the apparatus comprises both the level sensor and the torque detection and operates as above described.

Preferably, the device for reducing into small pieces comprises cutting devices, preferably two cutting devices having cutting directions inclined to each other, to cut said elastomeric compound into regular pieces of centimetre sizes.

Preferably, the device for reducing into small pieces comprises a longitudinal cutting device and a transverse cutting device for cutting said elastomeric compound into parallelepipeds of centimetre sizes.

The cut carried out in this manner appears to be clean and the structure of the cutting device is relatively simple.

Preferably, the longitudinal cutting device comprises a plurality of circular blades, each disposed around a first cylinder rotating about a first axis perpendicular to a feeding direction of the elastomeric compound.

Preferably, the longitudinal cutting device comprises two first cylinders facing each other and counter-rotating around respective first axes perpendicular to a feeding direction of the elastomeric compound and each of said two first cylinders has annular ridges provided with circular blades and engaged in respective annular furrows of the other first cylinder.

Preferably, the transverse cutting device comprises at least one transverse blade extending along a direction substantially perpendicular to the feeding direction of the elastomeric compound and disposed on a second cylinder rotating about a second axis parallel to the first axis.

According to a preferred embodiment, the transverse cutting device comprises at least one transverse blade susceptible of translation along a direction perpendicular to the feeding direction of the elastomeric compound.

According to an embodiment, the apparatus comprises a conveyor interposed between the outlet of said device for reducing into small pieces and the inlet of the mixing extruder.

The device for reducing into small pieces and the mixing extruder can be placed at a distance from each other and also at different heights. The conveyor further enables the small pieces to be distributed in a uniform manner before conveying them into the hopper of the mixing extruder.

Preferably, the control unit is operatively connected to the conveyor for adjusting the feeding speed of said conveyor as a function of the operating speed of the device for reducing into small pieces.
The control unit controls both the device for reducing into small pieces and the conveyor, as a function of the filling degree of the mixing extruder, or of the detected torque and/or level.

In accordance with an embodiment, the apparatus further comprises an auxiliary hopper placed downstream of the outlet of the device for reducing into small pieces and over the conveyor for temporary storage of the elastomeric compound in small pieces.

The auxiliary hopper acts as a "buffer", because the material in small pieces stored therein during operation under steady conditions is used during possible temporary stops of the device for reducing into small pieces, for continuing to feed the mixing extruder without being obliged to stop it.

Preferably, the hopper walls are movable for reducing the possibility that the small pieces may be packed.

The hopper is for example provided with vibrating masses causing vibration of the walls.

In accordance with an embodiment, the conveyor comprises a conveying surface and holding walls extending from the conveying surface, in which a holding end surface has an aperture for metering of the elastomeric compound in small pieces.

In this configuration it is the conveyor itself that also acts as a "buffer" because the small pieces are accumulated between the walls in such an amount that in any case during a temporary stop of the device for reducing into small pieces and the temporary lack of upstream material, the material goes on flowing through the metering aperture over a sufficient time to enable the drawback to be remedied.

Preferably, the holding walls are movable for reducing the possibility that the small pieces may be packed.

Movement of the walls produces remixing of the small pieces and prevents the same from sticking against each other.

According to an embodiment, the apparatus further comprises a gravimetric metering device placed between the outlet of the device for reducing into small pieces and the inlet opening of the mixing extruder and operatively connected to the control unit so as to supply the elastomeric compound in small pieces according to predetermined proportions with additional ingredients.

The gravimetric metering device is used in the mixing extruders for accurately controlling the proportions of the ingredients relative to the elastomeric compound reduced into small pieces.

According to an embodiment, the apparatus comprises:
- a first and a second conveyor placed in parallel between the outlet of said device for reducing into small pieces and the inlet of the mixing extruder;
- a baffle placed at the outlet of the device for reducing into small pieces and adapted to convey the outgoing small pieces on the first or the second conveyor.

Before starting the production line, both conveyors are loaded with the small pieces of elastomeric material. During normal operation, only the first conveyor is in motion while the second conveyor is stationary and acts as a "buffer". The second conveyor starts operating when, following a stop of the device for reducing into small pieces, the small pieces on the first conveyor are finished.

According to an embodiment, the outlet of the device for reducing into small pieces is placed above the inlet of the mixing extruder.

The device for reducing into small pieces directly unloads the product into the hopper of the mixing extruder without interposition of any intermediate conveyor, which involves structural simplification of the apparatus.

According to an embodiment, the mixing extruder is of the two-screw type.

According to an embodiment, the mixing extruder is of the multi-screw ring-shaped type.

Further features and advantages will become more apparent from the detailed description of preferred but not exclusive embodiments of an apparatus for producing elastomeric compounds, in accordance with the present invention.

### Brief description of drawings

This description will be set out hereinafter with reference to the accompanying drawings, given by way of non-limiting example, in which:
- Fig. 1 diagrammatically shows an embodiment of an extrusion apparatus for producing elastomeric compounds according to the invention in an elevation side view;
- Figs. 1a and 1b show respective alternative forms of an element of the apparatus in Fig. 1;
- Fig. 1c is an enlarged view of another element of the apparatus in Fig. 1;
- Figs. 2a and 2b show a plan view and an elevation side view respectively of a first alternative form of the apparatus in Fig. 1;
- Figs. 3a and 3b show a plan view and an elevation side view respectively of a second alternative form of the apparatus in Fig. 1;
- Figs. 4a and 4b show a plan view and an elevation side view respectively of a third alternative form of the apparatus in Fig. 1;
- Figs. 5a and 5b show a plan view and an elevation side view respectively of a fourth alternative form of the apparatus in Fig. 1;
- Fig. 6 is a perspective view of an element of the apparatus shown in Figs. 5a and 5b;
- Fig. 7 is a plan view of a fifth alternative form of the apparatus in Fig. 1;
- Fig. 8 is a plan view of a sixth alternative form of the apparatus in Fig. 1;
- Figs. 9a and 9b show a plan view and an elevation side view respectively of a seventh alternative form of the apparatus in Fig. 1;
- Fig. 10 illustrates a radial half-section of a tyre for vehicle wheels manufactured following the method of the present invention.

### Detailed description of preferred embodiments of the invention

With reference to the accompanying drawings, an extrusion apparatus for producing elastomeric compounds has been generally identified by reference numeral 1.

Apparatus 1 comprises a device 2 for cutting into small pieces 3, an elastomeric compound 4 previously prepared in a discontinuous mixer of the Banbury^{®} type, not shown as known by itself, and fed by a feeding device 5. A mixing extruder 6 receives the small pieces from the device 2 for cutting into small pieces 3 and process them so as to obtain a compound more homogeneous and of better quality.

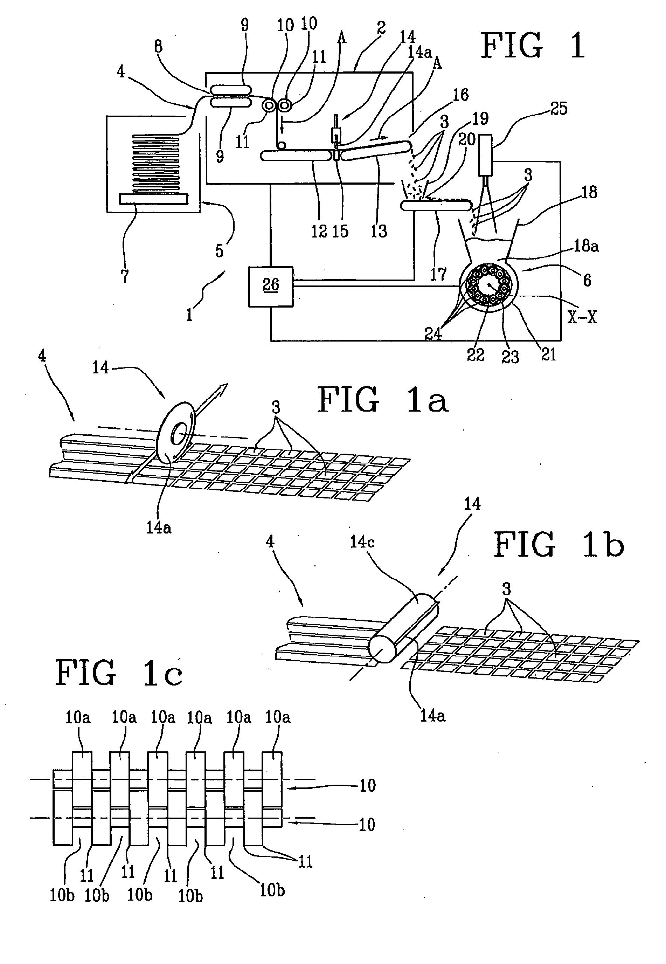

In the embodiment shown in Fig. 1, the feeding device 5 comprises a pallet 7 supporting a ribbon of elastomeric material 4 folded over into layers.

The device 2 for cutting into small pieces 3 is a device for carrying out cuts along two axes and is able to reduce the ribbon of elastomeric material 4 that is continuously supplied by pallet 7 into small cubes, blocks, tiles or other similar shapes.

The device 2 for cutting into small pieces 3 at an inlet 8 thereof comprises two first conveyor belts 9 having faced conveying surfaces delimiting a slit between them for passage of said elastomeric compound 4 in the form of ribbon.

Downstream of the first conveyor belts 9, the ribbon of elastomeric material 4 passes through a longitudinal cutting device formed with two first faced cylinders 10 provided with circular blades 11. Each of the circular blades 11 extends around the respective first cylinder 10 in a plane orthogonal to a respective first rotation axis and the circular blades 11 are spaced apart the same distance along said first rotation axis. Blades 11 cut the ribbon of elastomeric material 4 into strips along longitudinal cutting lines parallel to the longitudinal extension of the ribbon and along a feeding direction "A" of same.

Shown in Fig. 1c is a preferred alternative form of the longitudinal cutting device, according to which the two faced and counter-rotating cylinders 10 are provided with annular ridges 10a alternated with annular furrows 10b. Each ridge 10a of one of the cylinders 10 is engaged in a furrow 10b of the other. Each ridge 10a on the respective circular edges defines blades 11 for cutting the ribbon 4. The axial extension of each of furrows 10b and each of ridges 10a is the same and the ribbon 4 passing between said cylinders 10 is divided into strips of same width.

The cut strips continue their travel lying on an upper surface of a second conveyor belt 12. A third conveyor belt 13 is disposed consecutive to the second one 12 and a transverse cutting device 14 is disposed between the two conveyor belts; said transverse cutting device 14 comprises a transverse blade 14a and an abutment element 15. The transverse blade 14a shown is positioned over the abutment element 15 on which the ribbon of elastomeric compound 4 runs.

In the form shown in Figs. 1 and 1a, the transverse blade 14a is a disc rotating along a direction orthogonal to the feeding direction "A" of the elastomeric compound 4 and orthogonal to the longitudinal cutting lines.

In the variant in Fig. 1b, the transverse blade 14a is rectilinear and extends along a generatrix of a second rotating cylinder 14c around a second axis parallel to the first rotation axes of the first faced cylinders 10.

The transverse blade 14a cuts the strips into small pieces 3 along transverse cutting lines perpendicular to the longitudinal extension of the ribbon and the feeding direction "A" of same.

The third conveyor belt 13 terminates at an outlet 16 of device 2 for cutting into small pieces 3.

Downstream of the outlet 16 and under it, a conveyor 17 is disposed and it carries the small pieces 3 previously cut until an inlet hopper 18 disposed on an inlet opening 18a of the mixing extruder 6. The small pieces 3 fall down from the outlet 16 into an auxiliary hopper 19 placed above an upper conveying surface of conveyor 17. The auxiliary hopper 19 has an opening 20 disposed at the upper conveying surface of conveyor 17 and turned towards the mixing extruder 6. The small pieces 3 falling into the auxiliary hopper 19 are temporarily accumulated and go out, resting on conveyor 17, through the opening 20 that will distribute them on the upper conveying surface of conveyor 17 therefore acting as a metering device.

The hopper 18 of the mixing extruder 6 and the extruder 6 itself are placed under a final end of conveyor 17. The small pieces 3 fall therefore under gravity from conveyor 17 to the mixing extruder 6. The mixing extruder 6 diagrammatically shown in Fig. 1 in cross-section is of the multi-screw ring-shaped type used for mixing operations involving addition of other ingredients in given proportions besides the elastomeric compound 4 in small pieces 3. To this aim, since the elastomeric compound 4 in small pieces 3 must be metered in fixed proportions with the other ingredients, the conveyor 17 is a gravimetric metering device, i.e. it is provided with a weight sensor, not shown, dynamically detecting the amount of small pieces 3 in transit in order to adjust the amount of the other ingredients.

The mixing extruder 6 comprises a substantially cylindrical holding body 21 which mainly extends along a longitudinal direction and carries a mandrel 22 inside a chamber thereof. An annular chamber 23 is confined between a radially external surface of mandrel 22 and a radially internal surface of the holding body 21 and said chamber is partly coincident with the chamber of the holding body 21. Mandrel 22 extends along a longitudinal axis "X-X" and is coaxially and fixedly mounted in the body 21. Extrusion screws 24, preferably six in number of more than six, are disposed in the annular chamber 23, around mandrel 22 and parallel to the longitudinal axis "X-X". Screws 24 penetrate into each other and are self-cleaning, are rotatably supported by the body 21 and substantially extend along the whole longitudinal extension of the annular chamber 23. Screws 24 are driven in rotation by a motor, not shown, and along their longitudinal extension have regions with different structural features in order to submit the compound to different steps of the process. Screws 24 by their rotation cause the compound components to move forward in a predetermined transport direction and, at the same time, carry out treatment of said components in such a manner as to produce the compound itself and give the compound the desired physico-chemical features before it is ejected through an unloading opening.

A laser level sensor 25 pointing to the inside of hopper 18 is disposed over the hopper 18 of the mixing extruder 6; it is able to detect the surface level "L" of the small pieces 3 temporarily stored in the hopper 18 while they are coming down under gravity and little by little into the mixing extruder 6.

Apparatus 1 further comprises an electronic control unit 26 operatively connected to device 2 for cutting into small pieces 3, conveyor 17, mixing extruder 6 and laser level sensor 25. The control unit 26 receives a signal from the laser level sensor 25 indicative of the level "L" of the small pieces 3 in hopper 18 and directly correlated with the filling degree of the mixing extruder 6, i.e. to the ability of the mixing extruder 6 to treat the amount of material it receives at the entry. Based on this signal, the control unit 26 carries out the feedback control of the cutting speed of the cutting device 2, the speed of conveyor 17 and possibly the rotation speed of screws 24 of the mixing extruder 6 so as to keep the measured level "L" in the preset neighbourhood of a preset reference value corresponding to a predetermined and optimal value of the filling degree of the mixing extruder 6.

The control unit 26 is further connected to the motor of the mixing extruder 6 to detect the torque "C" of the extrusion screws 24. In fact, this torque "C" too is directly correlated with the filling degree of the mixing extruder 6, i.e. the ability of the mixing extruder to treat the amount of material it receives at the entry.

In use, if for instance while the mixing extruder 6 is working, the torque "C" goes up until exceeding the predetermined neighbourhood of the respective predetermined value (e.g. 90% of the maximum torque supplied by the motor with asymmetric neighbourhood equal to -10% +5% of the maximum torque relative to the preset 90% value) while level "L" in the inlet torque 18 remains in the neighbourhood of the predetermined value (e.g. hopper filled to 50%, predetermined value equal to 60% with neighbourhood of +20% -20% of the maximum level, for example), it is the detected torque "C" that operates device 2 for cutting into small pieces 3. Which means that the speed of device 2 for cutting into small pieces 3 is varied in order to keep the detected torque "C" in the neighbourhood of 90% of the maximum torque.

If on the contrary the torque "C" remains to a low level and in any case under the respective predetermined value (e.g. torque at 60% and predetermined value equal to 90% with asymmetric neighbourhood -10%, +5% of the maximum torque value relative to the preset 90% value, therefore a preset range from 80% to 95% of the maximum torque), while the level "L" in the inlet hopper 18 is in the neighbourhood of the respective predetermined value (e.g. hopper filled to 70% with a preset neighbourhood of the predetermined value of 60% equal to +20%, -20% therefore a range from 40% to 80% of the maximum filling level), it is the detected level "L" that operates the device 2 for cutting into small pieces 3. Which means that the speed of device 2 for cutting into small pieces 3 is varied to keep the level "L" of the small pieces 3 in the inlet hopper 18 in the neighbourhood of 60% of filling.

If, due to arising of a problem in feeding the elastomeric compound ribbon 4, it is necessary to stop device 2 for cutting into small pieces 3, the auxiliary hopper 19 containing an accumulation of small pieces 3 acts as a buffer and allows the mixing extruder 6 to be maintained in operation and go on working over a certain period of time, usually sufficient to solve the problem and restart device 2 for cutting into small pieces.

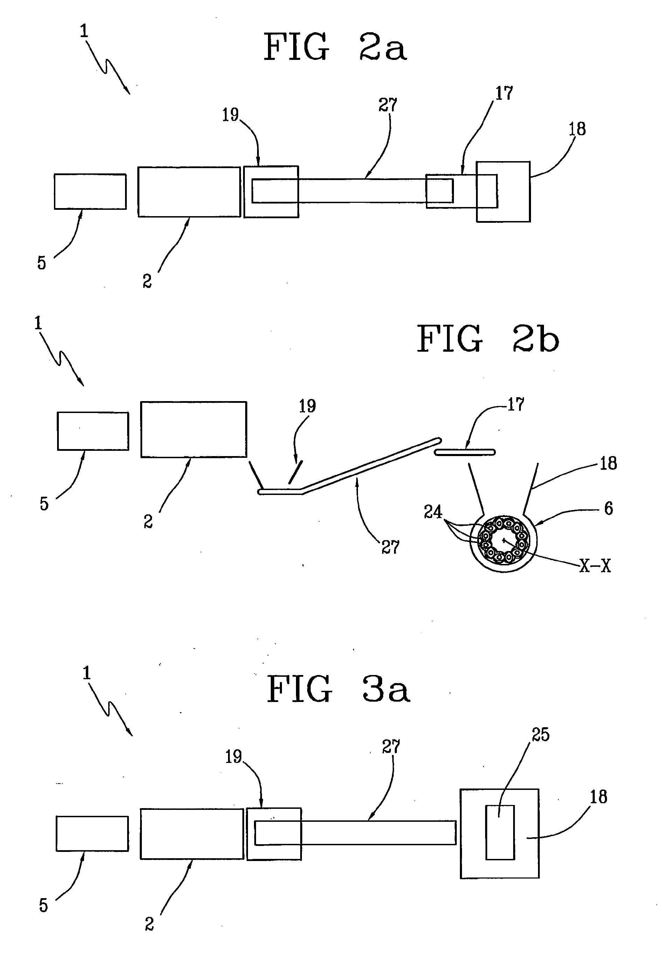

In a first alternative form of apparatus 1 shown in Figs. 2a and 2b, the laser level sensor 25 is not present and only the control unit 26 (not shown) is connected to the motor of the mixing extruder 6 to detect the torque of the extrusion screws 24.

In addition, an auxiliary conveyor 27 is present which is disposed between the auxiliary hopper 19 and the gravimetric metering device 17. Said auxiliary hopper 19 is placed over an upper conveying surface of the auxiliary conveyor 27 instead of over the gravimetric metering device 17 and said auxiliary conveyor 27 has an upward inclined stretch starting from the auxiliary hopper 19 to the mixing extruder 6, so that the mixing extruder 6 can be disposed substantially to the same height as the device 2 for cutting into small pieces 3.

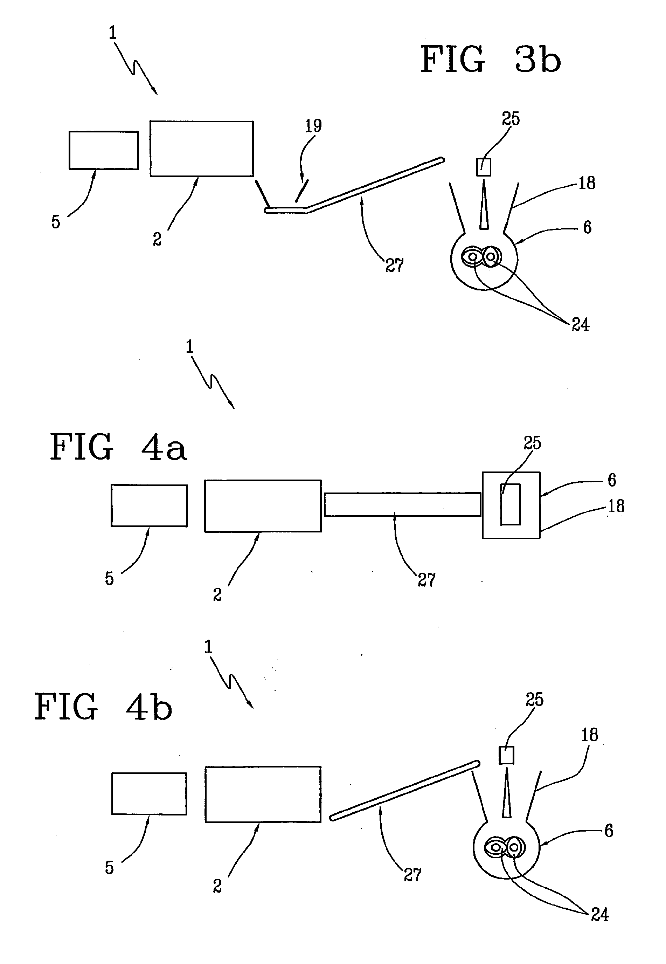

In a second alternative form of the apparatus 1 shown in Figs. 3a and 3b, the differences relative to the first alternative form in Figs. 2a and 2b consist in that the mixing extruder 6 is of the two-screw type and is used for remill processing operations, for example of a compound obtained through at least one previous mixing operation made in a discontinuous mixer, carried out without adding other ingredients. Therefore, the gravimetric metering device 17 is absent. In addition, as in the form in Fig. 1, the filling degree of the mixing extruder 6 is detected using only the laser level sensor 25.

A third alternative form of apparatus 1, shown in Figs. 4a and 4b, is a simplified version of the second alternative form devoid of the auxiliary hopper 19.

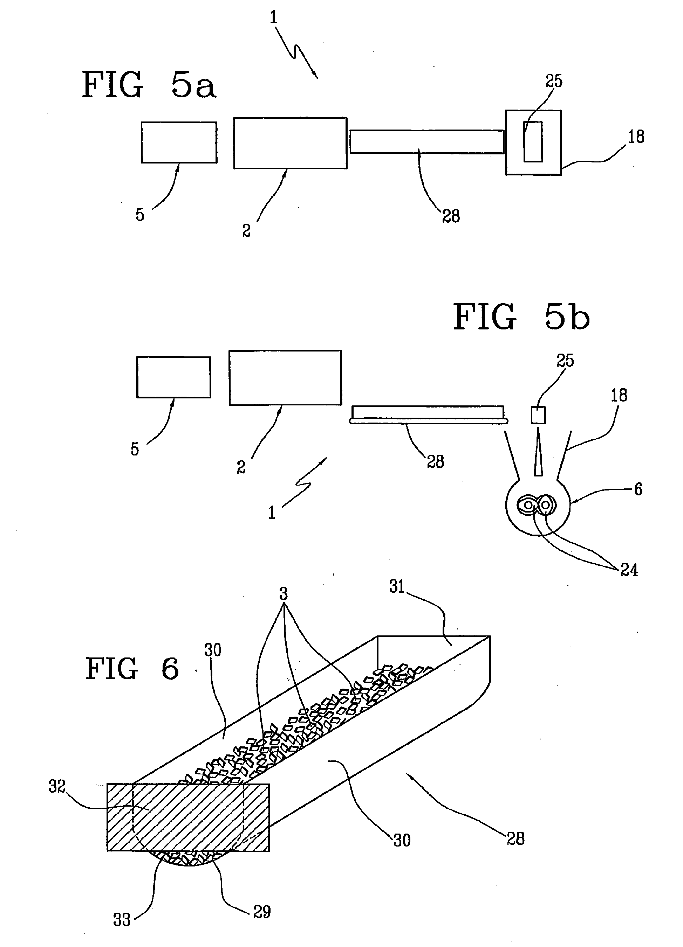

A fourth alternative form of apparatus 1, shown in Figs. 5a and 5b, is different from the third form because, in place of the auxiliary inclined conveyor 27, a conveyor 28 is present that also acts as a buffer. This conveyor 28 is shown in greater detail in Fig. 6 and comprises an arched conveying surface 29, two longitudinal holding side walls 30 vertically extending from the arched conveying surface 29, a transverse holding wall 31 close to the outlet 16 of device 2 for cutting into small pieces 3 and an end holding wall 32 close to hopper 18 of the mixing extruder 6. The end holding wall 32 has a lower opening 33 for metering the elastomeric compound 4 in small pieces 3. The width of this lower opening 33 can be adjusted through a gate. The conveyor 28 can be further provided with flexible walls (possibly moved by pistons at the sides) and/or vibrating masses in order to reduce the possibility that the small pieces 3 may become packed.

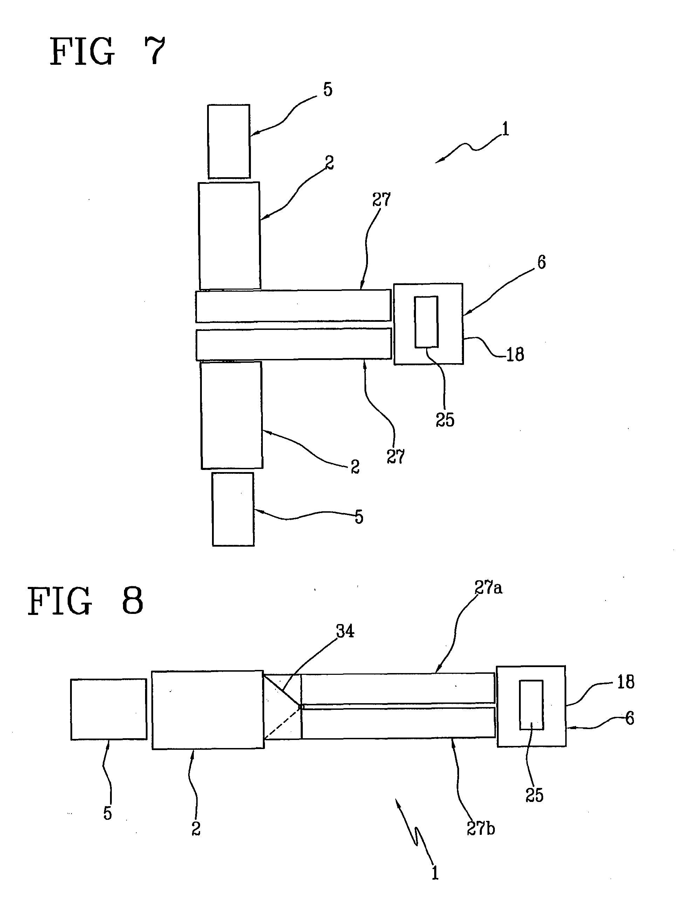

A fifth alternative form of apparatus 1 shown in Fig. 7 contemplates the presence of two lines in parallel, each of the type of the third alternative form (storage unit 5, device 2 for cutting into small pieces 3, inclined auxiliary conveyor 27) ending to a single hopper 18 of a single mixing extruder 6 provided with laser level sensor 25.

In a sixth alternative form of apparatus 1, shown in Fig. 8, the feeding device 5 and device 2 for cutting into small pieces 3 are single devices, but inclined first and second auxiliary conveyors 27a, 27b are provided, which are disposed in parallel and end over a single hopper 18 of a single mixing extruder 6 provided with laser level sensor 25. Apparatus 1 according to the sixth alternative form further comprises a baffle 34 defined by a movable wall and placed at the outlet 16 of device 2 for cutting into small pieces 3. Baffle 34 is shiftable, in an automatic manner or by an operator, between two work positions so as to alternately convey the cut small pieces 3 onto the first or the second conveyor 27a, 27b.

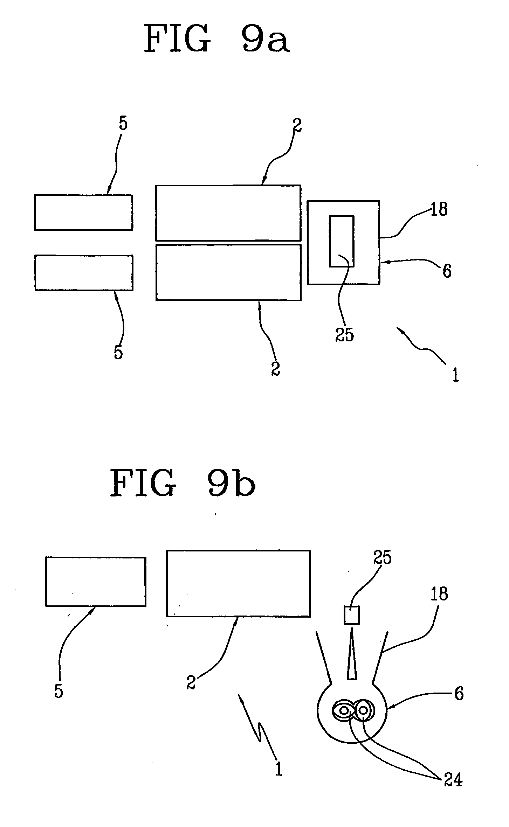

A seventh alternative form of apparatus 1, shown in Figs. 9a and 9b, contemplates the presence of two lines in parallel, like the fifth form, but each of these lines is devoid of the inclined auxiliary conveyor 27 and the hopper 18 of the mixing extruder 6 is placed directly under the outlet 16 of each of the two devices 2 for cutting into small pieces 3.

A further alternative form, not shown, is like the seventh form but it contemplates the presence of one line alone instead of two.

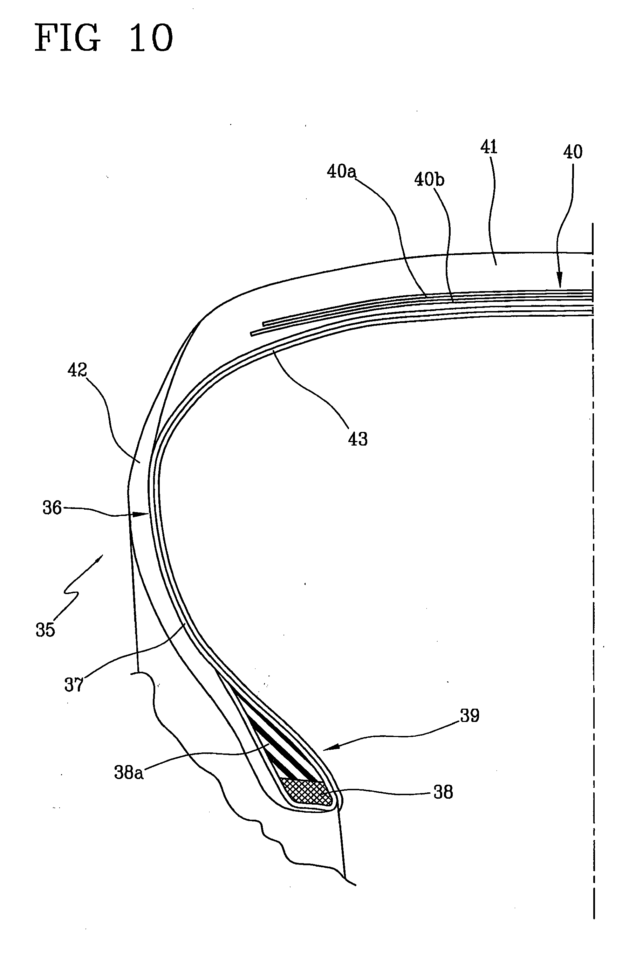

Denoted at reference numeral 35 in Fig. 10 is a tyre for vehicle wheels produced following the method and with the apparatus in accordance with the invention and consisting of a plurality of structural elements. Tyre 35 generally comprises a carcass structure 36 including at least one carcass ply 37 having respectively opposite end flaps in engagement with respective annular anchoring structures 38, possibly associated with elastomeric fillers 38a integrated into the regions 39 usually identified as "beads". The carcass ply 37 comprises a plurality of textile or metallic reinforcing cords disposed parallel to each other and at least partly coated with a layer of elastomeric material.

Associated with the carcass structure 36 is a belt structure 40 comprising one or more belt layers 40a, 40b, disposed in radially superposed relationship with each other and with the carcass ply 37 and having typically metallic reinforcing cords. These reinforcing cords can have crossed orientation relative to the circumferential extension direction of tyre 35.

A tread band 41 of elastomeric compound like other semifinished products constituting tyre 35 is applied at a radially external position to the belt structure 40.

The tread band 41 can be made up of two portions, a radially more external portion intended for contact with the road surface, and a radially more internal portion, or underlayer, placed in contact with the belt structure 40.

In addition, the respective sidewalls 42 of elastomeric compound are applied at an axially external position onto the side surfaces of the carcass structure 36, each extending from one of the side edges of the tread band 41 to the respective annular anchoring structure 38 to the beads 39.

A radially internal surface of tyre 35 is further preferably internally coated with a layer of airtight elastomeric material, a so-called liner 43.
In the embodiment shown in Fig. 10 tyre 35 is of the type for motor-vehicles.

Typically in this case the belt structure 36 further comprises at least one radially external layer including textile cords disposed at a substantially zero angle relative to the circumferential extension direction of tyre 35.

Tyre 35 can be of the type intended for use for heavy duty vehicles. The expression "heavy duty vehicle" is generally understood as indicating a vehicle belonging to categories M2∼M3, N1∼N3 or 02-04 defined in "Consolidated Resolution of the Construction of Vehicles (R.E.3) (1997)", Annex 7, pages 52-59, "Classification and Definition of Power-Driven Vehicles and Trailers", such as lorries, trucks, tractors, buses, vans and other vehicles of this type. The belt structure of a tyre for heavy duty vehicles (not shown) typically comprises a belt layer usually known as "gravel guard belt", which is the radially outermost layer of the belt structure and acts as the protection layer against penetration of stones and/or gravel into the innermost layers of the tyre structure. Preferably, the belt structure of a tyre for heavy duty vehicles further comprises a reinforcing side strip that can be radially superposed on the second belt layer, at an axial end thereof. The side strip incorporates a plurality of reinforcing elements, preferably high-elongation metal cords. Preferably, in addition, an insert is disposed substantially close to the shoulder portion, i.e. the portion where the side end of the tread band is connected to the sidewall. In particular, the insert has a portion that is interposed substantially in the radial direction between the belt structure and the tread band and a portion that is interposed substantially in the axial direction between the carcass and the sidewall.

Tyre 35 can alternatively be for motor-vehicles. The cross-section profile of the tyre for motor-vehicles (not shown) has a high transverse curvature because it must ensure sufficient footprint area under all inclination conditions of the motor-vehicle. The transverse curvature is defined by the value of the ratio between the distance "f" of the centre of the tread from the line passing through the laterally opposite ends "E" of the tread itself measured in the equatorial plane of the tyre, and the width "C" defined by the distance between the laterally opposite ends "E" of the tread itself. By tyre with high transverse curvature it is indicated a tyre the transverse curvature ratio (f/C) of which is at least 0.20. Preferably, (f/C) is included between 0.20 and 0.5 for a rear tyre and respectively between 0.35 and 0.6 for a front tyre.

Tyre 35 is manufactured by assembling respective semifinished products comprising one or several elastomeric compounds, each of which can be produced using apparatus 1.

After building of the green tyre, a vulcanisation and moulding treatment is generally carried out which aims at determining the structural stabilisation of the tyre through cross-linking of the elastomeric compounds as well as impressing the tread band, wrapped around the carcass before vulcanisation, with a desired tread pattern and the sidewalls with possible distinctive graphic marks.
Typically the compounds used in the present invention can comprise a polymeric base including at least one elastomeric diene polymer selected from those commonly used in elastomeric compositions cross-linkable with sulphur that are particularly suitable for tyre production, or from elastomeric polymers or copolymers with an unsaturated chain having a glass transition temperature (Tg) generally under 20°C, preferably in the range of 0°C to -110°C. These polymers and copolymers can be of natural origin or can be obtained by solution polymerisation, emulsion polymerisation or gas-phase polymerisation of one or more conjugated diolefins, optionally mixed with at least one comonomer selected from monovinylarens and/or polar comonomers.

The elastomeric polymer can be selected from the conjugated diolefins generally containing 4 to 12, preferably 4 to 8 carbon atoms and can be selected for example, from the group comprising: 1,3-butadiene, 2,3-dimethyl-1,3-butadiene, 1,3-pentadiene, 1,3-hexadiene, 3-butyl-1,3-octadiene, 2-phenyl-1,3-butadiene or mixtures thereof. 1,3-butadiene is particularly preferred.

Monovinylarens optionally usable as co-monomers generally have 8 to 20, preferably 8 to 12 carbon atoms, and can be selected from, for example: styrene; 1-vinylnaphthalene; 2-vinylnaphthalene; some alkyl, cycloalkyl, aryl, akylaryl or arylalkyl styrene derivatives such as, for example, α-methylstyrene, 3-methylstyrene, 4-propylstyrene, 4-cyclohexylstyrene, 4-dodecylstyrene, 2-ethyl-4-benzylstyrene, 4-p-tolylstyrene, 4-(4-phenylbutyl)styrene, or mixtures thereof. Particularly preferred is styrene.

The polar comonomers that optionally can be used, can be for example selected from vinylpiridine, vinylquinoline, acrylic acid and alkylacrylic acid esters, nitriles or mixtures thereof such as methyl acrylate, ethyl acrylate, methyl metacrylate, ethyl metacrylate, acrylonitrile or mixtures thereof.

Preferably, the elastomeric diene polymer can be for example selected from: cis-1,4-polyisoprene (natural or synthetic, preferably natural rubber), 3,4-polyisoprene, polybutadiene (in particular high "1,4-cis" polybutadiene), optionally halogenated isoprene/isobutene copolymers, 1,3-butadiene/acrylonitrile copolymers, styrene/1,3-butadiene copolymers, styrene/isoprene/1,3-butadiene copolymers, styrene/1,3-butadiene/acrylonitrile copolymers or mixtures thereof.

The compound may optionally comprise at least one elastomeric polymer of one or more monoolefins with an olefin comonomer or derivatives thereof. Monoolefins can be selected from: ethylene and α-olefins generally having 3 to 12 carbon atoms, such as, for example, propylene, 1-butene, 1-pentene, 1-hexene, 1-octene or mixtures thereof. The following are preferred: copolymers of ethylene and an α-olefin, optionally with a diene; homopolymers of isobutene or copolymers thereof with smaller amounts of diene, optionally at least partly halogenated. The optionally present diene generally has 4 to 20 carbon atoms and is preferably selected from: 1,3-butadiene, isoprene, 1,4-hexadiene, 1,4-cyclohexadiene, 5-ethylidyne-2-norbornene, 5-methylene-2-norbornene, vinylnorbornene or mixtures thereof. Of them particularly preferred are the following: ethylene/propylene (EPR) copolymers or ethylene/propylene/diene (EPDM) copolymers; polyisobutene; butyl rubbers, halobutyl rubbers, in particular chlorobutyl or bromobutyl rubbers; or mixtures thereof.

The mixture may optionally comprise at least one polyisoprene rubber and/or at least one elastomeric diene polymer that are made functional through reaction with appropriate terminating or coupling agents.

At least one reinforcing filler can be advantageously added to the compound, the reinforcing filler can be selected from those commonly used for tyres, such as carbon black, silica, alumina, aluminosilicates, calcium carbonate, kaolin or mixtures thereof. Particularly preferred are carbon black, silica and mixtures thereof.

The compound can be vulcanised following known techniques, in particular by means of sulphur-based vulcanisation systems, commonly used for elastomeric polymers. The most-advantageously used vulcanisation agent is sulphur or sulphur-containing molecules (sulphur donors) with vulcanisation activators, accelerators or retarders known to those skilled in the art.

The vulcanisation activators that are particularly efficient are the sulphur compounds and in particular ZnO, ZnCO3, saturated or unsaturated fatty acid zinc salts containing 8 to 18 carbon atoms such as zinc stearate for example, that are preferably formed in situ in the elastomeric composition from ZnO and fatty acids and also BiO, PbO, Pb3O4, PbO2 or mixtures thereof. The stearic acid is typically used as the activator agent with zinc oxide.

Said compound may comprise other commonly used additives to be selected based on the specific application.

In order to further improve workability, a plasticizer, generally selected from mineral oils, vegetable oils, synthetic oils or mixtures thereof such as paraffin oil, aromatic oil, naphthenic oil, phthalates, or mixtures thereof can be added to the compound.

The compound may comprise other commonly used additives selected based on the specific application. For instance, the following can be added to the compound: antioxidants, anti-aging agents, plasticizers, adhesiveness agents, antiozonizers (in particular of the p-phenylenediamine type), waxes, modifying resins, fibres, or mixtures thereof.

### Example

In a discontinuous mixer, Banbury^{®}, a compound has been produced that has been subsequently unloaded and fed to a single-screw extruder from which it has been unloaded in the form of a continuous ribbon, the ribbon being then folded over into layers and having the following features:
- compound density 1.200 kg/dm3;
- ribbon width 615 mm;
- ribbon thickness 7 mm.

The continuous ribbon of elastomeric compound has bee sent to a device for reducing into small pieces by cutting in two (longitudinal, transverse) directions. These small pieces have been fed to an extruder "Maris" and it was established to make it work with a flow rate of 200 kg/h and a torque equal to 65% of the maximum torque supplied by the extruder's motor.
To this aim, the feedback control according to the invention has adjusted the operating speed of the cutting device so that the extruder's torque could be maintained around the established value (65% of the maximum torque).
The cutting device worked under the following conditions:
- longitudinal cut: strip width = 35 mm;
- transverse-cut frequency: 3.2 sec/cut;
- size of the small squares: 35 mm x 35 mm;
- weight of the transverse row of small squares: 35 mm x 615 mm x 7 mm x 10^-6 x 1.2 kg/dm^3 = 0.18081 kg
- flow rate of the cutting device = 0.18081*3600/3.2= 203.4 kg/h.

## Claims

1. A method of producing tyres, comprising:
- producing a plurality of structural elements of said tyres, in which at least one structural element of said plurality of structural elements comprises at least one eiastomeric compound;
wherein the production of said at least one structural element comprises:
- producing at least one elastomeric compound (4) comprising at least one elastomeric polymer and at least one reinforcing filler in at least one first mixer;
- setting work parameters of a second mixer (6);
- reducing said elastomeric compound (4) into small pieces of controlled sizes and continuously feeding the second mixer (6) with said small pieces (3),
which will continuously process them;
- detecting at least one magnitude value (L, C) representative of the filling degree of said mixing extruder (6),
**characterized in that**
- the first mixer is a discontinuous mixer;
- the second mixer is a mixing extruder (6), the mixing extruder being of the two-screw type or of the multi-screw ring-shaped type;
- the detected magnitude (C) is
-- the torque of the screws (24) of the mixing extruder (6) and/or
-- the filling level of an inlet hopper (18) of the mixing extruder
and
**in that** the method further comprises;
adjusting the speed for reducing the elastomeric compound into small pieces (3) so as to maintain one of the detected magnitude values (L, C) in the preset neighbourhood of a predetermined value.

2. A method as claimed in claim 1, wherein the magnitude (L; C) maintained in the preset neighbourhood of the respective predetermined value is the one that first comes out of the preset neighbourhood during the work of the mixing extruder (6).

3. A method as claimed in one of the preceding claims, comprising: adjusting the rotation speed of the screws (24) of the mixing extruder (6), in such a manner as to keep the detected magnitude (L; C) in the neighbourhood of the predetermined value.

4. A method as claimed in one of the preceding claims, wherein the small pieces are cut out from a ribbon, a sheet or a bale of said elastomeric compound.

5. A method as claimed in one of the preceding claims, wherein the small pieces have sizes in the order of the centimetre.

6. A method as claimed in one of the preceding claims, comprising: spraying a lubricating liquid on the elastomeric compound (4) during or after reducing it into small pieces (3).

7. An apparatus for manufacturing of tyres for vehicle wheels comprising:
- at least one first mixer of the closed type or open type for carrying out at least one mixing operation for the production of an elastomeric compound (4); and
- an apparatus for producing elastomeric compounds, comprising:
- a device for reducing said elastomeric compound into small pieces of controlled sizes;
- a device (2) for continuously feeding said elastomeric compound to an inlet of the device for reducing into small pieces (3);
- a second mixer (6) having an inlet opening (18a) operatively connected with an outlet (16) of said device for reducing into small pieces (3);
- at least one device for detecting a magnitude indicative of the filling degree of the second mixer (6);
- a control unit (26) operatively connected to the device for reducing into small pieces (3) and the detecting device, for adjusting the operating speed of the device for reducing into small pieces in such a manner as to maintain said indicative magnitude in the preset neighbourhood of a predetermined value, **characterized in that**
- the first mixer is discontinuous mixer
- the second mixer is a mixing extruder (6), the mixing extruder being of the two-screw type or of the multi-screw ring-shaped type
- the detecting device is operatively active on the extrusion screws (24) of said mixing extruder and detects
-- the torque of said extrusion screws and/or
-- the detecting device comprises a level sensor (25) operatively acting on an inlet hopper of said mixing extruder (6) for detecting the level of the small pieces in transit in said inlet hopper (18).

8. An apparatus as claimed in claim 7, wherein the level sensor (25) is of the laser type.

9. An apparatus as claimed in claim 7, wherein the device (2) for reducing into small pieces (3) comprises a longitudinal cutting device (10, 11) and a transverse cutting device (14, 15).

10. An apparatus as claimed in claim 7, comprising a conveyor (27, 28) interposed between the outlet (16) of said device (2) for reducing into small pieces (3) and the inlet (18a) of the mixing extruder (6), wherein the control unit (26) is operatively connected to the conveyor (27, 28) for adjusting the feeding speed of said conveyor (27, 28) as a function of the operating speed of the device (2) for reducing into small pieces (3).

11. An apparatus as claimed in claim 7, further comprising a conveyor (27, 28) interposed between the outlet (16) of said device (2) for reducing into small pieces (3) and the inlet (18a) of the mixing extruder (6) and an auxiliary hopper (19) placed downstream of the outlet (16) of the device (2) for reducing into small pieces (3) and over the conveyor (27) for temporary storage of the elastomeric compound (4) in small pieces (3).

12. An apparatus as claimed in claim 7, further comprising a conveyor (27, 28) interposed between the outlet (16) of said device (2) for reducing into small pieces (3) and the inlet (18a) of the mixing extruder (6) and wherein the conveyor (28) comprises a conveying surface (29) and holding walls (30, 31, 32) extending from the conveying surface (29), in which a holding end surface (32) has an aperture (33) for metering of the elastomeric compound (4) in small pieces (3).

13. An apparatus as claimed in one of claims 7 to 12, further comprising a gravimetric metering device (17) placed between the outlet (16) of the device (2) for reducing into small pieces (3) and the inlet opening (18a) of the mixing extruder (6) and operatively connected to the control unit (26) for metering the elastomeric compound (4) in small pieces (3) according to predetermined proportions with additional ingredients.

14. An apparatus as claimed in claim 7, comprising:
- a first and a second conveyor (27a, 27b) placed in parallel between the outlet (16) of said device (2) for reducing into small pieces (3) and the inlet (18a) of the mixing extruder (6); a baffle (34) placed at the outlet (16) of the device (2) for reducing into small pieces (3) and adapted to convey the outgoing small pieces (3) on the first or the second conveyor (27a, 27b).

15. An apparatus as claimed in claim 7, wherein the outlet (16) of the device (2) for reducing into small pieces (3) is placed above the inlet (18a) of the mixing extruder (6).

## Patentansprüche

1. Verfahren zur Herstellung von Reifen, wobei das Verfahren umfasst:
- Herstellen einer Vielzahl von Strukturelementen der Reifen, wobei zumindest ein Strukturelement aus der Vielzahl von Strukturelementen zumindest eine Elastomerkomponente aufweist;
wobei die Herstellung des zumindest einen Strukturelements umfasst:
- Herstellen zumindest einer Elastomerkomponente (4) umfassend zumindest ein elastomeres Polymer und zumindest einen verstärkenden Füllstoff in zumindest einem ersten Mischer;
- Einstellen von Arbeitsparametern eines zweiten Mischers (6);
- Zerkleinern der Elastomerkomponente (4) in kleine Stücke mit kontrollierten Größen und kontinuierliches Versorgen des zweiten Mischers (6) mit den kleinen Stücken (3), wobei der Mischer diese kontinuierlich verarbeitet;
- Erfassen zumindest eines Größenordnungswerts (L, C), der den Füllgrad des Mischextruders (6) darstellt,
**dadurch gekennzeichnet, dass**
- der erste Mischer ein diskontinuierlicher Mischer ist;
- der zweite Mischer ein Mischextruder (6) ist, wobei der Mischextruder vom Zweischneckentyp bzw. vom ringförmigen Mehrschneckentyp ist;
- die erfasste Größenordnung (C)
- das Drehmoment der Schnecken (24) des Mischextruders (6) und/oder
- der Füllstand eines Zufuhrtrichters (18) des Mischextruders ist; und
dass das Verfahren des Weiteren umfasst:
Einstellen der Geschwindigkeit der Zerkleinerung der Elastomerkomponente in kleine Stücke (3), um einen der erfassten Größenordnungswerte (L, C) im voreingestellten Bereich um einen vorbestimmten Wert zu halten.

2. Verfahren nach Anspruch 1, wobei die Größenordnung (L; C), die in dem voreingestellten Bereich um den jeweiligen vorbestimmten Wert gehalten wird, jene ist, die als erstes während des Betriebs des Mischextruders (6) den voreingestellten Umgebungsbereich verlässt.

3. Verfahren nach einem der vorhergehenden Ansprüche, umfassend: Einstellen der Drehzahl der Schnecken (24) des Mischextruders (6) auf eine Weise, dass die erfasste Größenordnung (L; C) in dem Umgebungsbereich um den vorbestimmten Wert bleibt.

4. Verfahren nach einem der vorhergehenden Ansprüche, wobei die kleinen Stücke aus einem Band, einer Tafel oder einem Ballen der Elastomerkomponente geschnitten werden.

5. Verfahren nach einem der vorhergehenden Ansprüche, wobei die kleinen Stücke Größen im Zentimeterbereich aufweisen.

6. Verfahren nach einem der vorhergehenden Ansprüche, umfassend: Aufsprühen einer Schmierflüssigkeit auf die Elastomerkomponente (4) während oder nach ihrer Zerkleinerung in kleine Stücke (3).

7. Vorrichtung zur Herstellung von Reifen für Fahrzeugräder, umfassend:
- zumindest einen ersten Mischer vom geschlossenen Typ oder offenen Typ zur Durchführung eines Mischvorgangs für die Herstellung einer Elastomerkomponente (4);
und
- eine Vorrichtung zur Herstellung von Elastomerkomponenten, die umfasst:
- eine Einrichtung zur Zerkleinerung der Elastomerkomponente (4) in kleine Stücke mit kontrollierten Größen;
- eine Einrichtung (2) zur kontinuierlichen Zufuhr der Elastomerkomponente an einen Einlass der Einrichtung zur Zerkleinerung in kleine Stücke (3);
- einen zweiten Mischer (6) mit einer Einlassöffnung (18a), die mit einem Auslass (16) aus der Einrichtung zur Zerkleinerung in kleine Stücke (3) wirkverbunden ist;
- zumindest eine Einrichtung zur Erfassung einer Größenordnung, die den Füllgrad des zweiten Mischers (6) angibt;
- eine Steuereinheit (26), die mit der Einrichtung zur Zerkleinerung in kleine Stücke (3) und der Erfassungseinrichtung wirkverbunden ist, um die Arbeitsgeschwindigkeit der Einrichtung zur Zerkleinerung in kleine Stücke auf eine Weise einzustellen, um die den Füllgrad angebende Größenordnung in dem voreingestellten Umgebungsbereich eines vorbestimmten Werts zu halten,
**dadurch gekennzeichnet, dass**
- der erste Mischer ein diskontinuierlicher Mischer ist;
- der zweite Mischer ein Mischextruder (6) ist, wobei der Mischextruder vom Zweischneckentyp bzw. vom ringförmigen Mehrschneckentyp ist;
- die Erfassungseinrichtung operativ auf die Extrusionsschnecken (24) des Mischextruders wirkt und
- das Drehmoment der Extrusionsschnecken erfasst und/oder
- die Erfassungseinrichtung einen Füllstandssensor (25) umfasst, der operativ auf einen Zufuhrtrichter des Mischextruders (6) wirkt, um den Füllstand der kleinen Stücke, die den Zufuhrtrichter (18) durchlaufen, zu erfassen.

8. Vorrichtung nach Anspruch 7, wobei der Füllstandssensor (25) vom Lasertyp ist.

9. Vorrichtung nach Anspruch 7, wobei die Einrichtung (2) zur Zerkleinerung in kleine Stücke (3) eine Längsschneideeinrichtung (10, 11) und eine Querschneideeinrichtung (14, 15) umfasst.

10. Vorrichtung nach Anspruch 7, umfassend eine Fördereinrichtung (27, 28), die zwischen den Auslass (16) der Einrichtung (2) zur Zerkleinerung in kleine Stücke (3) und den Einlass (18a) des Mischextruders (6) geschaltet ist, wobei die Steuereinheit (26) mit der Fördereinrichtung (27, 28) wirkverbunden ist, um die Zufuhrgeschwindigkeit der Fördereinrichtung (27, 28) als eine Funktion der Arbeitsgeschwindigkeit der Einrichtung (2) zur Zerkleinerung in kleine Stücke (3) einzustellen.

11. Vorrichtung nach Anspruch 7, umfassend eine Fördereinrichtung (27, 28), die zwischen den Auslass (16) der Einrichtung (2) zur Zerkleinerung in kleine Stücke (3) und den Einlass (18a) des Mischextruders (6) geschaltet ist, sowie einen Zusatztrichter (19), der stromabwärts des Auslasses (16) der Einrichtung (2) zur Zerkleinerung in kleine Stücke (3) und über der Fördereinrichtung (27) angeordnet ist, als temporärer Speicher für die Elastomerkomponente (4) in kleinen Stücken (3).

12. Vorrichtung nach Anspruch 7, umfassend eine Fördereinrichtung (27, 28), die zwischen den Auslass (16) der Einrichtung (2) zur Zerkleinerung in kleine Stücke (3) und den Einlass (18a) des Mischextruders (6) geschaltet ist, und wobei die Fördereinrichtung (28) eine Förderoberfläche (29) und Haltewände (30, 31, 32) umfasst, die sich von der Förderoberfläche (29) weg erstrecken, wobei eine Endhaltefläche (32) eine Öffnung (33) zur Dosierung der Elastomerkomponente (29) in kleinen Stücken (3) aufweist.

13. Vorrichtung nach einem der Ansprüche 7 bis 12, des Weiteren umfassend ein gravimetrische Dosiereinrichtung (17), die zwischen dem Auslass (16) der Einrichtung (2) zur Zerkleinerung in kleine Stücke (3) und dem Einlass (18a) des Mischextruders (6) angeordnet und mit der Steuereinheit (26) zur Dosierung der Elastomerkomponente (4) in kleinen Stücken (3) nach vorbestimmten Verhältnissen mit zusätzlichen Inhaltsstoffen wirkverbunden ist.

14. Vorrichtung nach Anspruch 7, umfassend:
- eine erste und eine zweite Fördereinrichtung (27a, 27b), die parallel zwischen dem Auslass (16) der Einrichtung (2) zur Zerkleinerung in kleine Stücke (3) und dem Einlass (18a) des Mischextruders (6) angeordnet sind; eine Ablenkvorrichtung (34), die an dem Auslass (16) der Einrichtung (2) zur Zerkleinerung in kleine Stücke (3) angeordnet und dazu geeignet ist, die abgehenden kleinen Stücke (3) zu der ersten oder der zweiten Fördereinrichtung (27a, 27b) zu befördern.

15. Vorrichtung nach Anspruch 7, wobei der Auslass (16) der Einrichtung (2) zur Zerkleinerung in kleine Stücke (3) über dem Einlass (18a) des Mischextruders (6) angeordnet ist.

## Revendications

1. Procédé de production de pneus, comprenant le fait :
- de produire une pluralité d'éléments structuraux desdits pneus, où au moins un élément structural de ladite pluralité d'éléments structuraux comprend au moins un composé élastomère ;
où la production dudit au moins un élément structural comprend le fait :
- de produire au moins un composé élastomère (4) comprenant au moins un polymère élastomère et au moins une charge renforçante dans au moins un premier mélangeur ;
- de régler des paramètres de travail d'un deuxième mélangeur (6) ;
- de réduire ledit composé élastomère (4) en petits morceaux de dimensions régulées et d'alimenter en continu le deuxième mélangeur (6) en lesdits petits morceaux (3), qui va les traiter en continu ;
- de détecter au moins une valeur de grandeur (L, C) représentant le degré de remplissage de ladite extrudeuse-mélangeuse (6),
**caractérisé en ce que**
- le premier mélangeur est un mélangeur discontinu ;
- le deuxième mélangeur est une extrudeuse-mélangeuse (6), l'extrudeuse-mélangeuse étant du type à deux vis ou du type en forme annulaire à vis multiples ;
- la grandeur détectée (C) est
- le couple des vis (24) de l'extrudeuse-mélangeuse (6) et/ou
- le niveau de remplissage d'une trémie d'entrée (18) de l'extrudeuse-mélangeuse
et
**en ce que** le procédé comprend en outre le fait :
d'ajuster la vitesse pour réduire le composé élastomère en petits morceaux (3) de façon à maintenir l'une des valeurs de grandeur détectées (L, C) dans le voisinage préréglé d'une valeur prédéterminée.

2. Procédé tel que revendiqué dans la revendication 1, dans lequel la grandeur (L ; C) maintenue dans le voisinage préréglé de la valeur prédéterminée respective est celle qui sort en premier du voisinage préréglé pendant le travail de l'extrudeuse-mélangeuse (6).

3. Procédé tel que revendiqué dans l'une des revendications précédentes, comprenant le fait : d'ajuster la vitesse de rotation des vis (24) de l'extrudeuse-mélangeuse (6), de manière à maintenir la grandeur détectée (L ; C) dans le voisinage de la valeur prédéterminée.

4. Procédé tel que revendiqué dans l'une des revendications précédentes, dans lequel les petits morceaux sont découpés à partir d'un ruban, d'une feuille ou d'une balle dudit composé élastomère.

5. Procédé tel que revendiqué dans l'une des revendications précédentes, dans lequel les petits morceaux ont des dimensions de l'ordre du centimètre.

6. Procédé tel que revendiqué dans l'une des revendications précédentes, comprenant le fait : de pulvériser un liquide lubrifiant sur le composé élastomère (4) pendant ou après sa réduction en petits morceaux (3).

7. Appareil destiné à fabriquer des pneus pour des roues de véhicule comprenant :
- au moins un premier mélangeur du type ouvert ou du type fermé pour réaliser au moins une opération de mélange pour la production d'un composé élastomère (4) ; et
- un appareil pour produire des composés élastomères, comprenant :
- un dispositif pour réduire ledit composé élastomère en petits morceaux de dimensions régulées ;
- un dispositif (2) pour alimenter en continu ledit composé élastomère à une entrée du dispositif destiné à réduire en petits morceaux (3) ;
- un deuxième mélangeur (6) ayant une ouverture d'entrée (18a) reliée de manière fonctionnelle à une sortie (16) dudit dispositif destiné à réduire en petits morceaux (3) ;
- au moins un dispositif pour détecter une grandeur indiquant le degré de remplissage du deuxième mélangeur (6) ;
- une unité de commande (26) reliée de manière fonctionnelle au dispositif destiné à réduire en petits morceaux (3) et au dispositif de détection, pour ajuster la vitesse de fonctionnement du dispositif destiné à réduire en petits morceaux de manière à maintenir ladite grandeur indicative dans le voisinage préréglé d'une valeur prédéterminée, **caractérisé en ce que**
- le premier mélangeur est un mélangeur discontinu
- le deuxième mélangeur est une extrudeuse-mélangeuse (6), l'extrudeuse mélangeuse étant du type à deux vis ou du type en forme annulaire à vis multiples
- le dispositif de détection est actif de manière fonctionnelle sur les vis d'extrusion (24) de ladite extrudeuse-mélangeuse et détecte
- le couple desdites vis d'extrusion et/ou
- le dispositif de détection comprend un capteur de niveau (25) agissant de manière fonctionnelle sur une trémie d'entrée de ladite extrudeuse-mélangeuse (6) pour détecter le niveau des petits morceaux en transit dans ladite trémie d'entrée (18).

8. Appareil tel que revendiqué dans la revendication 7, dans lequel le capteur de niveau (25) est du type laser.

9. Appareil tel que revendiqué dans la revendication 7, dans lequel le dispositif (2) destiné à réduire en petits morceaux (3) comprend un dispositif de coupe longitudinale (10, 11) et un dispositif de coupe transversale (14, 15).

10. Appareil tel que revendiqué dans la revendication 7, comprenant un convoyeur (21, 28) interposé entre la sortie (16) dudit dispositif (2) destiné à réduire en petits morceaux (3) et l'entrée (18a) de l'extrudeuse-mélangeuse (6), où l'unité de commande (26) est reliée de manière fonctionnelle au convoyeur (27, 28) pour ajuster la vitesse d'alimentation dudit convoyeur (27, 28) en fonction de la vitesse de fonctionnement du dispositif (2) destiné à réduire en petits morceaux (3).

11. Appareil tel que revendiqué dans la revendication 7, comprenant en outre un convoyeur (27, 28) interposé entre la sortie (16) dudit dispositif (2) destiné à réduire en petits morceaux (3) et l'entrée (18a) de l'extrudeuse-mélangeuse (6) et une trémie auxiliaire (19) placée en aval de la sortie (16) du dispositif (2) destiné à réduire en petits morceaux (3) et au-dessus du convoyeur (27) pour un stockage temporaire du composé élastomère (4) en petits morceaux (3).

12. Appareil tel que revendiqué dans la revendication 7, comprenant en outre un convoyeur (27, 28) interposé entre la sortie (16) dudit dispositif (2) destiné à réduire en petits morceaux (3) et l'entrée (18a) de l'extrudeuse-mélangeuse (6) et où le convoyeur (28) comprend une surface de transport (29) et des parois de maintien (30, 31, 32) s'étendant depuis la surface de transport (29), où une surface d'extrémité de maintien (32) a une ouverture (33) pour doser le composé élastomère (4) en petits morceaux (3).

13. Appareil tel que revendiqué dans l'une des revendications 7 à 12, comprenant en outre un dispositif de dosage gravimétrique (17) placé entre la sortie (16) du dispositif (2) destiné à réduire en petits morceaux (3) et l'ouverture d'entrée (18a) de l'extrudeuse-mélangeuse (6) et relié de manière fonctionnelle à l'unité de commande (26) pour doser le composé élastomère (4) en petits morceaux (3) selon des proportions prédéterminées avec des ingrédients supplémentaires.

14. Appareil tel que revendiqué dans la revendication 7, comprenant :
- des premier et deuxième convoyeurs (27a, 27b) placés en parallèle entre la sortie (16) dudit dispositif (2) destiné à réduire en petits morceaux (3) et l'entrée (18a) de l'extrudeuse mélangeuse (6) ; un déflecteur (34) placé au niveau de la sortie (16) du dispositif (2) destiné à réduire en petits morceaux (3) et adapté pour transporter les petits morceaux sortants (3) sur le premier ou le deuxième convoyeur (27a, 7b).

15. Appareil tel que revendiqué dans la revendication 7, dans lequel la sortie (16) du dispositif (2) destiné à réduire en petits morceaux (3) est placée au-dessus de l'entrée (18a) de l'extrudeuse-mélangeuse (6).
